# DEMANDE DE BREVET EUROPEEN

(11) **EP 4 105 798 A1**
(43) Date de publication de la demande: **21.12.2022**
(21) Numéro de dépôt: 22179380.5
(22) Date de dépôt: 16.06.2022
(51) Int. Cl.: G06F 21/34, H04L 9/32, H04L 9/40

(54) **PROCÉDÉ D AUTHENTIFICATION, DISPOSITIF ET PROGRAMME CORRESPONDANT**

(30) Priorité: 16.06.2021 FR 2106355
(71) Demandeur: Orange, 92130 Issy-les-Moulineaux (FR)
(72) Inventeur: DURO, Jean-Marc, 92326 CHATILLON (FR)
(74) Mandataire: Vidon Brevets & Stratégie

(57) **Abrégé**

L'invention se rapporte à un procédé d'authentification d'un accès via un terminal de communication (TCom), auprès d'un serveur. Le procédé comprend, postérieurement à la transmission (101), par une application d'accès du terminal de communication (TCom), au serveur (SrvC), d'une requête de connexion :
une étape de transformation (105) d'un élément variable, (Rstub) reçu du serveur, à l'aide de matériels de transformation obtenus lors d'une inscription auprès du serveur, délivrant un élément transformé (stubrep) ;
une étape de transmission (108), au serveur, d'un identifiant (IdU) associé audit accès et de l'élément transformé (stubrep) ; et
une étape de réception (110) d'une d'authentification dudit accès, en provenance du serveur tenant compte dudit élément transformé .

## Description

### 1. Domaine

La divulgation se rapporte à l'authentification d'accès à des dispositifs de communication. La divulgation se rapporte plus particulièrement à une méthode d'authentification d'un utilisateur ou d'une application auprès d'un service distant.

### 2. Technique antérieure

La numérisation de la vie quotidienne a engendré une contrainte de sécurisation des accès à des services dispensés en ligne par l'intermédiaire de serveurs auxquels les utilisateurs se connectent à l'aide de terminaux de communication. La traditionnelle méthode d'authentification, dite simple facteur, par la saisie de couples d'identifiants/mots de passe a fait long feu, principalement du fait de l'inconscience des utilisateurs qui emploient des mots de passe insuffisamment sécurisés et/ou qui emploient des mots de passe identiques pour différents services (entrainant l'insécurité de leurs données personnelles). Les découvertes de centaines de milliers de comptes piratés sur divers fournisseurs de services attestent de l'ampleur des problèmes rencontrés. Pour pallier les problèmes posés par l'authentification à un seul facteur, telle qu'évoqué précédemment, des méthodes d'authentification à deux facteurs ont été construites.

L'authentification à deux facteurs a longtemps été considérée comme une bonne réponse aux problèmes de piratage de comptes rencontrés par les utilisateurs et les fournisseurs de services. Cette authentification à deux facteurs consiste en réalité à utiliser deux mécanismes différents pour authentifier une connexion à un service à partir d'un terminal de communication. Par exemple, une authentification a deux facteurs peut être mise en œuvre d'une part en effectuant une première saisie d'un couple de données de type (identifiant, mot de passe) (premier facteur) puis en réalisant une deuxième saisie, dans un champ de formulaire dédié d'une page de connexion subséquemment affichée, d'un code de confirmation reçu par un autre mécanisme de communication. Basiquement, un tel code de confirmation est transmis par courrier électronique ou par SMS (de l'anglais pour *« short message service »*)*.* Ces deux méthodes comprennent cependant des inconvénients.

La transmission d'un code de confirmation par courrier électronique, il est de plus en plus pointé du doigt comme étant peu sûre : il suffit qu'un logiciel malveillant soit installé sur le terminal de communication de l'utilisateur pour que ce code soit intercepté et permette au pirate de l'utiliser, sur un dispositif différent de celui de l'utilisateur légitime pour se connecter aux services sécurisés. Plus simplement encore, il suffit que le couple identifiant/mot de passe utilisé pour le compte de courrier électronique soit identique à celui utilisé pour accéder au service demandé, pour que le pirate soit instantanément en mesure de récupérer le code de confirmation transmis.

Bien que plus sécurisé, en théorie, la transmission d'un code de confirmation par SMS comporte également des inconvénients, l'un d'entre eux étant le besoin de disposer de deux dispositifs séparés pour effectuer l'authentification. Par exemple lorsque l'on souhaite se connecter à un service à partir d'un ordinateur portable, il est nécessaire de disposer d'un smartphone pour prendre connaissance du code transmis par SMS. Lorsque l'on se connecte au service avec son smartphone (c'est-à-dire que l'on ne dispose que d'un seul appareil pour les deux facteurs d'authentification), la sécurisation par code de confirmation transmis par SMS devient tout autant problématique que celle par code de confirmation transmis par email : il suffit qu'une application malveillante soit installée sur le smartphone pour qu'elle prenne connaissance du code de confirmation transmis.

De plus, l'autorité bancaire européenne a acté la fin des SMS de confirmation pour les paiements en ligne, rendant nécessaire la mise en œuvre de solutions alternatives, mieux sécurisées. Pour renforcer la sécurité, les autorités européennes souhaitaient remplacer ce mécanisme par un processus plus fiable mais aussi plus complexe. Le SMS pourra ainsi être remplacé, en fonction des acteurs, par la saisie d'un code confidentiel sur l'application bancaire installée sur le terminal de communication, par une empreinte digitale ou encore par de la reconnaissance faciale. Cependant, cela entraine une adaptation à marche forcée, à la fois des acteurs impliqués, dont les banques et les sites de vente en ligne, mais aussi des utilisateurs, qui doivent disposer d'équipements suffisamment récents et/ou ayant des capacités mémoire et/ou de traitement suffisantes.

Il existe donc un besoin d'une solution permettant d'améliorer la sécurisation des authentifications des utilisateurs.

### 3. Résumé

La technique objet de la présente divulgation a été construite en conservant ces problèmes de l'art antérieur à l'esprit. Plus particulièrement, il est proposé une technique d'authentification qui se base sur la mise en œuvre d'un mot de passe d'un mot de passe variable, par exemple variant entre deux connexions successives, par exemple à usage unique. Plus particulièrement, il est proposé une méthode dans laquelle une nouvelle connexion à un service nécessite l'utilisation d'un nouveau mot de passe, lequel nouveau mot de passe étant inconnu de l'utilisateur, mais étant généré indépendamment de celui-ci.

La solution proposée se distingue ainsi des méthodes antérieures qui reposent, au final, sur la connaissance ou la possession, par l'utilisateur de plusieurs facteurs d'authentifications différents (authentification multi facteurs). En effet, bien que théoriquement la sécurité apportée par ces méthodes antérieure soit augmentée, en pratique cela n'est pas toujours le cas, particulièrement lorsqu'elles reposent sur la connaissance d'information complémentaires fournies par l'utilisateur, comme par exemple des mots de passe mal sélectionnés.

Plus particulièrement, il est proposé un procédé d'authentification d'un accès via un terminal de communication, auprès d'un serveur. Un tel procédé comprend, postérieurement à la transmission, par une application d'accès du terminal de communication, au serveur, d'une requête de connexion :
- une étape de transformation d'un élément variable, reçu du serveur, à l'aide de matériels de transformation obtenus lors d'une inscription auprès du serveur, délivrant un élément transformé ;
- une étape de transmission, au serveur, d'un identifiant associé audit accès et de l'élément transformé ; et
- une étape de réception d'une d'authentification dudit accès, en provenance du serveur tenant compte dudit élément transformé.

Ainsi, il est possible de garantir une authentification sécurisée, sans qu'une personne ou un utilisateur n'ait à utiliser un mot de passe pour l'authentification.

Selon une caractéristique particulière, l'authentification en provenance du serveur survient lorsque la transmission, au serveur, de l'identifiant et de l'élément transformé, est effectuée avant un premier laps de temps.

Ainsi, il est possible de limiter, voire de supprimer les tentatives de rejeu de la part de fraudeurs.

Selon une caractéristique particulière, le procédé comprend :
- une réception, en provenance du serveur, par l'intermédiaire d'une liaison sécurisée, d'une réponse http comprenant un formulaire comprenant un champ de saisie de l'identifiant d'utilisateur et un champ caché comprenant l'élément variable ;
- un affichage du formulaire sur un écran du terminal de communication ;
- une extraction de l'élément variable et une transmission de l'élément variable à un module de transformation.

Ainsi, il est possible de diviser l'obtention des données nécessaires à l'authentification en deux voies distinctes.

Selon une caractéristique particulière, l'étape de transformation de l'élément variable comprend :
- La détermination, par le module de transformation, de matériels de transformation à appliquer sur l'élément variable ;
- La mise en œuvre des matériels de transformation sur l'élément variable, délivrant l'élément transformé.

Ainsi, la transformation de l'élément variable n'est pas toujours réalisée avec les mêmes matériels, ce qui renforce la sécurité de l'authentification.

Selon une caractéristique particulière, la détermination de matériels de transformation à appliquer sur l'élément variable comprend une étape de recherche, au sein d'une base de données, d'une clé de chiffrement.

Selon une caractéristique particulière, la mise en œuvre des matériels de transformation sur l'élément variable comprend une étape de chiffrement de l'élément aléatoire à l'aide de la clé de chiffrement.

Selon une caractéristique particulière, l'étape de transformation de l'élément variable est mise en œuvre par un module de transformation s'exécutant sur le terminal de communication, de manière indépendante de l'application d'accès.

Selon un autre aspect, la divulgation se rapporte également à un dispositif électronique d'authentification d'un accès, auprès d'un serveur, ledit dispositif comprenant des moyens de transmission, par une application d'accès du dispositif, au serveur, d'une requête de connexion et :
- des moyens de transformation d'un élément variable, reçu du serveur, à l'aide de matériels de transformation obtenus lors d'une inscription auprès du serveur, délivrant un élément transformé ;
- des moyens de transmission, au serveur, d'un identifiant associé audit accès et de l'élément transformé ; et
- des moyens de réception d'une d'authentification dudit accès, en provenance du serveur tenant compte dudit élément transformé.

Un tel dispositif peut par exemple se présenter sous la forme d'un terminal de communication. Un tel dispositif peut également se présenter sous la forme d'un dispositif sécurisé intégré au sein d'un terminal de communication.

Selon une caractéristique particulière, les moyens de réception d'une d'authentification dudit accès sont mis en œuvre lorsque la transmission, par le dispositif électronique d'authentification, au serveur, de l'identifiant et de l'élément transformé, est effectuée avant un premier laps de temps.

Selon une caractéristique particulière, le dispositif électronique d'authentification d'un accès comprend :
- Des moyens de réception, en provenance du serveur, par l'intermédiaire d'une liaison sécurisée, d'une réponse http comprenant un formulaire comprenant un champ de saisie de l'identifiant d'utilisateur et un champ caché comprenant l'élément variable ;
- Des moyens d'affichage du formulaire sur un écran du terminal de communication ;
- Des moyens d'extraction de l'élément variable et une transmission de l'élément variable à un module de transformation.

Selon une caractéristique particulière, les moyens de transformation de l'élément variable comprennent :
- Des moyens de détermination, par le module de transformation, de matériels de transformation à appliquer sur l'élément variable ;
- Des moyens de mise en œuvre des matériels de transformation sur l'élément variable, délivrant l'élément transformé.

Selon une caractéristique particulière, les moyens de détermination de matériels de transformation à appliquer sur l'élément variable comprennent la mise en œuvre de moyens de recherche, au sein d'une base de données, d'une clé de chiffrement.

Selon une caractéristique particulière, les moyens de mise en œuvre des matériels de transformation sur l'élément variable comprennent la mise en œuvre de moyens de chiffrement de l'élément aléatoire à l'aide de la clé de chiffrement.

Selon certaines implémentations, les différentes étapes des procédés de la divulgation sont mises en œuvre par un ou plusieurs logiciels ou programmes d'ordinateur, comprenant des instructions logicielles destinées à être exécutées par un processeur de données d'un terminal de communication ou d'un serveur selon la présente et étant conçu pour commander l'exécution des différentes étapes des procédés, mis en œuvre indépendamment ou en conjonction. En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur ou bien encore un support mobile (carte mémoire).

D'autre part, le support d'informations peut être un support transmissible tel qu'un signal électrique ou optique, qui peut être acheminé via un câble électrique ou optique, par radio ou par d'autres moyens. Le programme selon la présente peut, en particulier, être téléchargé sur un réseau de type Internet.

Alternativement, le support d'informations peut être un circuit intégré dans lequel le programme est incorporé, le circuit étant adapté pour exécuter ou pour être utilisé dans l'exécution d'un ou de plusieurs des procédés décrits.

Selon un mode de réalisation, la technique est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Brève description des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- [fig 1] décrit le principe général d'un procédé d'authentification de la divulgation selon au moins un exemple de réalisation;
- [fig 2] décrit une inscription auprès du serveur selon au moins un exemple de réalisation ;
- [fig 3] illustre un système de mise en œuvre de la technique décrite selon au moins un exemple de réalisation;
- [fig 4] illustre un dispositif de mise en œuvre de la technique décrite selon au moins un exemple de réalisation.

### 5. Description d'un mode de réalisation

### 5.1. Rappels du principe

Comme exposé précédemment, le principe général des méthodes objets de la divulgation comprend une définition d'un mot de passe variable, par exemple variant entre deux connexions successives, pour se connecter à un service auprès duquel un utilisateur ou un dispositif s'est inscrit. Il peut par exemple s'agir d'un mot de passe à usage unique. Le mot de passe n'étant destiné qu'à une seule connexion du terminal de communication utilisé, l'interception de ce mot de passe par un programme malveillant ou par un fraudeur ne porte pas à conséquence, car ce mot de passe devient par exemple inutilisable passé un temps donné, ce temps étant relativement court, et peut être limité à une seule connexion du terminal de communication de l'utilisateur. Ce mot de passe variable peut être généré par deux entités différentes : un serveur (auquel l'utilisateur tente de se connecter par l'intermédiaire de son terminal de communication) et un module de transformation, auquel le terminal de communication de l'utilisateur à accès. Ainsi, dans certains modes de réalisation, le serveur génère un élément variable, par exemple de manière aléatoire ou pseudo-aléatoire, transmet cet élément variable au terminal de communication au moment où celui-ci tente de se connecter, lequel terminal de communication relaie cet élément variable à un module de transformation qui transforme cet élément variable en un élément transformé. Le module de transformation retourne l'élément transformé au terminal de communication qui l'insère dans les données fournies au serveur pour valider la connexion au service. D'autres données peuvent également être fournies au serveur pour valider la connexion, et notamment un identifiant (par exemple un identifiant d'utilisateur), obtenu par le terminal de communication ou saisi par un utilisateur souhaitant accéder au service. Lorsque les données fournies au serveur par le terminal de communication correspondent à celles attendues (i.e. l'identifiant et l'élément transformé) alors la connexion est validée.

Grâce à cette technique, le traditionnel couple de données « identifiant/mot de passe » est replacé par un couple « identifiant/mot de passe variable (l'élément transformé) », le mot de passe variable, dont l'usage est par exemple unique (ou dont la probabilité de réutilisation peut être très faible), étant inconnu de l'utilisateur. La connaissance du mot de passe variable repose sur deux entités séparées (le serveur et le module de transformation). Par ailleurs, dans certains modes de réalisation, du côté du serveur, la génération et l'émission de l'élément variable transmis au terminal de communication peut déclencher une temporisation : un temps de référence est par exemple obtenu par le serveur et une durée maximale d'attente est planifiée. Si la réponse en provenance du terminal de communication est transmise au serveur après cette durée maximale d'attente, alors le serveur n'acceptera pas cette réponse du terminal de communication, et ce quel que soit le contenu de cette réponse : Par exemple, la réponse en provenance du terminal de communication peut même ne pas être examinée par le serveur. De plus, la génération, par le serveur, de l'élément variable peut être aléatoire ou pseudo aléatoire favorisant ainsi l'unicité de l'usage du mot de passe variable obtenu par le module de transformation. Dans d'autres variantes, la génération de l'élément variable peut être fonction de paramètres intrinsèques au serveur, comme par exemple un marqueur temporel.

Dans ce qui précède et ce qui suit, il est bien entendu que les étapes de transmission de données, d'une première entité vers une deuxième entité, constituent pour cette deuxième entité des étapes de réception et vice-versa, de sorte qu'il n'est pas nécessaire de décrire l'intégralité des ces étapes pour qu'elles soient comprises.

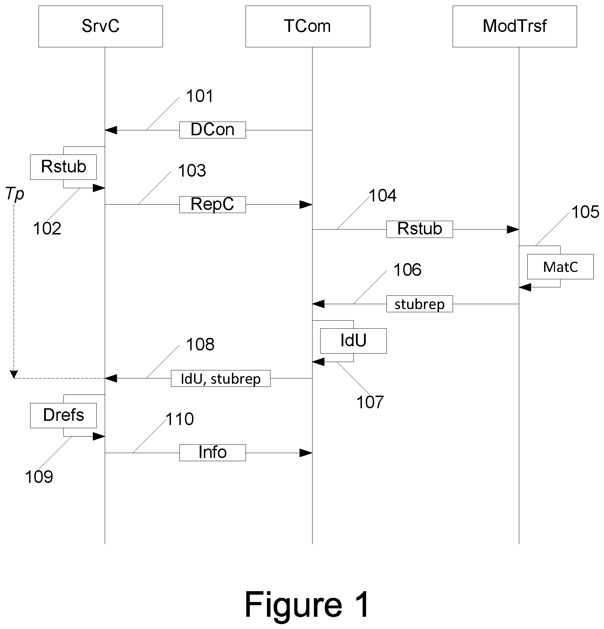

La figure 1 expose les différentes étapes du procédé d'authentification selon certains exemples de réalisation de la présente technique.

Le terminal de communication (Tcom) transmet (101) une demande de connexion (DCon) à un serveur (SrvC) auprès duquel l'utilisateur du terminal de communication est enregistré ;

Le serveur prépare (102) un élément variable (Rstub) et démarre par exemple une temporisation (Tp), et transmet (103) la réponse (RepC) à la demande de connexion, cette réponse comprenant l'élément variable généré. La temporisation mise en œuvre peut être optionnelle.

Le terminal de communication reçoit l'élément variable dans la réponse du serveur, l'identifie comme tel et le transmet (104) au module de transformation (ModTrsf) ;

Le module de transformation (ModTrsf) reçoit l'élément variable, le transforme (105) avec des matériels de transformation (MatC) à sa disposition et transmet (106) la valeur résultante (stubrep) au terminal de communication.

Subséquemment ou parallèlement à la transmission de l'élément variable au module de transformation, le terminal de communication obtient (107) (en provenance de d'une interface utilisateur ou d'un module de stockage) un identifiant (par exemple un identifiant d'utilisateur) (IdU) attendu par le serveur. Une fois que l'élément transformé est reçu de la part du module de transformation, le terminal de communication génère une réponse comprenant l'identifiant et l'élément transformé et la transmet (108) au serveur.

Le serveur obtient la réponse en provenance du terminal de communication et, par exemple si cette réponse est reçue dans les temps (avant la fin de la temporisation Tp), il en extrait certaines données (comme l'identifiant et l'élément transformé) et compare (109) ces données reçues à des données attendues (données de référence Drefs). Lorsque les données correspondent aux données de référence, l'accès au service peut être validé. Le serveur peut par exemple en informer (110) le terminal de communication (info). L'ensemble de ces étapes peuvent être mis en œuvre par le terminal de communication lui-même (nonobstant l'utilisation d'autres modules couplés par exemple au terminal) ou bien par une application d'accès (type navigateur web, application spécialisée) s'exécutant sur le terminal de communication. L'identifiant peut être un identifiant d'utilisateur ou encore un identifiant propre au terminal lui-même, indépendant de l'utilisateur du terminal).

Ainsi, dans certains modes de réalisation, l'authentification peut ne reposer que sur une seule donnée connue : un identifiant d'accès au service. La ou les autre(s) donnée(s) utilisées pour l'authentification (notamment le mot de passe variable) peuvent ne pas nécessiter une connaissance préalable (de l'utilisateur et par voie de conséquence d'un fraudeur disposant de cet identifiant). Ainsi, dans au moins certains modes de réalisation, on peut limiter l'effort de mémorisation d'un utilisateur tout en réduisant les risques de perte, d'oubli et/ou de définition d'un mot de passe insuffisamment sécurisé. En fonction des modes de réalisation, comme exposé par la suite, le module de transformation peut être intégré au (exécuté sur le) terminal de communication de l'utilisateur ou bien être un module de transformation distant, accessible par l'intermédiaire d'un réseau de communication.

Selon certains modes de réalisation de la présente technique, le module de transformation peut comprendre des moyens de détermination d'une transformation à appliquer sur un élément variable (par exemple aléatoire ou pseudo-aléatoire) qu'il reçoit de la part du serveur (cette transmission étant relayée par le terminal de communication). Plusieurs exemples de réalisation de cette transformation peuvent être envisagés. Certain de ces exemples sont décrits par la suite et les différentes caractéristiques de ces exemples sont bien entendues combinables entre elles, tout comme le sont les caractéristiques du procédé d'authentification, dont certains exemples de réalisation sont proposés par la suite.

Dans certains exemples de réalisation, le module de transformation peut donc comprendre des moyens de détermination d'au moins une transformation à appliquer sur un élément, comme un élément variable, qu'il reçoit de la part du serveur. Ces moyens peuvent être mis en œuvre en fonction d'une connaissance préalablement acquise des matériels de transformation à utiliser (i.e. d'au moins une fonction de transformation à appliquer (lorsque plusieurs fonctions de transformation sont utilisables) et/ou de paramètres de fonction(s) de transformation). Selon la présente technique, ces matériels de transformation peuvent être acquis par différents moyens. Par la suite on décrit l'acquisition de matériels de transformation lors de l'inscription de l'utilisateur au service rendu par le serveur. Il est cependant tout à fait envisageable que cette acquisition de matériels de transformation soit effectuée par d'autres biais, notamment par la fourniture, par l'opérateur du service, d'un module spécifiquement dédié, par exemple à connecter au terminal de communication de l'utilisateur, sur un port USB par exemple.

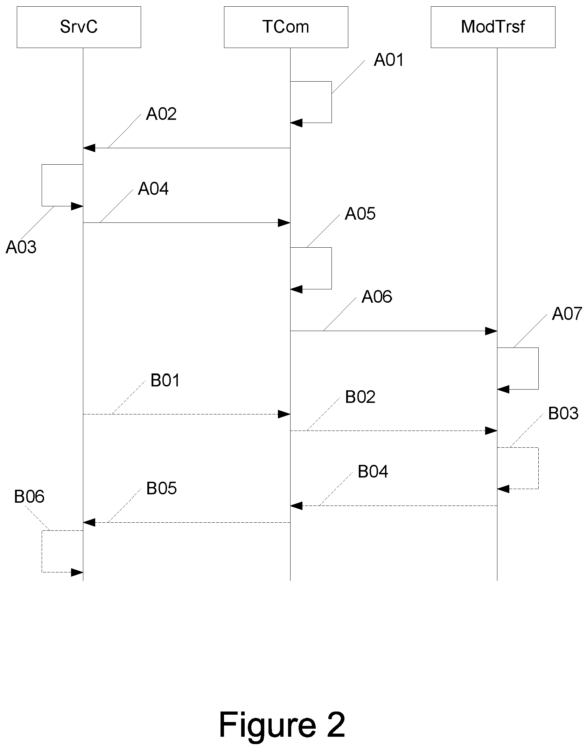

Ces matériels de transformation peuvent notamment être mis à la disposition du module de transformation lors de l'inscription initiale de l'utilisateur au service. Cette acquisition est, de manière simplifiée (i.e. l'ensemble des données traitées n'est pas détaillé), présentée en relation avec la figure 2.

Ainsi, La figure 2 expose les différentes étapes du procédé d'inscription selon certains exemples de réalisation de la présente technique.

Dans l'exemple de réalisation illustré, l'acquisition peut comprendre une exécution (A01), sur le terminal de communication, d'une application permettant l'inscription de l'utilisateur après du serveur (i.e. pour la mise en œuvre future d'un ou de plusieurs services auxquels l'utilisateur souhaite avoir accès). Cette application d'inscription (ou ce module d'inscription, selon la forme sélectionnée) effectue par exemple au moins certaines des opérations suivantes : affichage d'une interface homme-machine d'inscription comprenant une zone de saisie d'un identifiant (par exemple un identifiant d'utilisateur) et d'un mot de passe. Selon les modes de réalisation de la présente divulgation, l'application d'inscription peut être mise en œuvre par le module de transformation et/ou le module d'inscription et le module de transformation peuvent ne former qu'un seul et même module, par exemple installé au sein du terminal de communication de l'utilisateur. Par la suite, on décrit une séparation de ces modules/fonctions.

Dans l'exemple de réalisation illustré, l'utilisateur effectue la saisie demandée (e.g. sélection d'un identifiant et d'un mot de passe) et valide l'interface homme-machine d'inscription, ce qui provoque la transmission (A02), par l'application d'inscription, au serveur, des données saisies.

Le serveur contrôle (A03) les données reçues et lorsque ces données sont acceptées, transmet (A04), en retour, à l'application d'inscription, les matériels de transformation (la transformation à effectuer et/ou les paramètres de cette transformation). Cette étape de transmission, par le serveur, des matériels de transformation peut comprendre plusieurs échanges avec l'application d'inscription et certains de ces échanges sont décrits par la suite.

L'application d'inscription peut contrôler (A05) les matériels de transformation reçus (ce contrôle pouvant par exemple consister en une vérification CRC). Ce contrôle peut être optionnel dans certains modes de réalisation Elle transmet (A06) ces matériels de transformation reçus au module de transformation, qui les enregistre (A07), par exemple dans une zone de mémoire sécurisée et/ou dans un fichier protégé du système d'exploitation du dispositif sur lequel il s'exécute.

Comme explicité, l'étape de transmission, par le serveur, des matériels de transformation peut comprendre :
- la fourniture, en plus du couple identifiant mot de passe, d'un ou plusieurs codes basés sur une information personnelle et/ou une méthode de chiffrement que l'application d'inscription souhaite inscrire auprès du fournisseur de service ; ce ou ces codes fournis pouvant être dérivés d'une donnée biométrique, d'une image, d'un texte ou de n'importe quelle source de données du dispositif de communication de l'utilisateur par exemple;
- le traitement, par le serveur, de l'ensemble de données reçues de la part de l'application d'inscription, ledit traitement pouvant délivrer, d'une part une donnée d'identification d'une méthode de transformation à appliquer, parmi les méthodes de transformation proposées par l'application d'inscription (lorsque celle-ci a proposé plusieurs méthodes possibles par exemple) et d'autre part au moins un paramètre de transformation à appliquer, ledit paramètre étant par exemple dérivé, par le serveur, du ou des codes fournis par l'application d'inscription.

D'autres étapes concomitantes ou subséquentes peuvent également être mise en œuvre, comme :
- la transmission (B01), par le serveur, d'un élément variable de vérification à l'application d'inscription, qui transmet (B02) cet élément variable de vérification au module de transformation, lequel à partir des matériels de transformation (reçus par exemple précédemment), peut transformer (B03) cet élément variable de vérification en l'élément transformé de vérification et retransmet (B04) celui-ci à l'application d'inscription, qui le fait suivre (B05) au serveur pour vérification (B06) (selon le même processus que celui décrit précédemment) ; et
- la mise en œuvre du processus inverse (non illustrée), c'est-à-dire transmission, par l'application d'inscription, d'un élément variable de vérification au serveur, qui, à partir des matériels de transformation qu'il a généré, transforme cet élément variable de vérification en l'élément transformé de vérification et retransmet celui-ci à l'application d'inscription, qui le fait suivre au module de transformation pour vérification.

Ceci permet d'assurer que les matériels utilisés sont conformes aux attentes et qu'ils sont symétriquement détenus et enregistrés par les entités destinatrices (à savoir le serveur - ou un module spécifique et sécurisé du serveur) et le module de transformation.

### 5.2. Description d'exemples de réalisation

Dans cet exemple de réalisation, les matériels de transformation utilisés sont des clés de chiffrement, et l'on considère que le module de transformation d'une part et le serveur d'autre part mettent en œuvre une seule et unique méthode de transformation, à savoir l'utilisation dans une première fonction de chiffrement de la clé de chiffrement symétriquement détenue par eux deux sur l'élément variable transmis par le serveur. Cet exemple de réalisation n'est en rien limitatif de portée : il est envisagé que le matériel de transformation ne soit pas symétrique mais qu'il se compose de couples de clés privées et publiques. Il est également envisagé que ce matériel de transformation prenne la forme d'une ou de plusieurs tables associatives à utiliser dans un processus de type AES par exemple. Il est également envisagé que les matériels de transformation se présentent sous la forme de primitives ou fonction cryptographiques et d'instructions (de paramètres) d'enchainement d'exécution de ces primitives ou fonctions cryptographiques. Par ailleurs, la méthode de chiffrement utilisée par le module de transformation peut être négociée, entre le terminal de communication (i.e. entre le module d'inscription du terminal de communication) et le serveur au moment de l'inscription de l'utilisateur), comme par exemple BlowFish 256 bits. Les clés de chiffrement utilisées peuvent être uniquement déterminées par le terminal de communication lui-même (i.e. le module d'inscription du terminal de communication et/ou le module de transformation) ou faire l'objet d'une négociation entre le serveur et le terminal de communication lors de l'inscription.

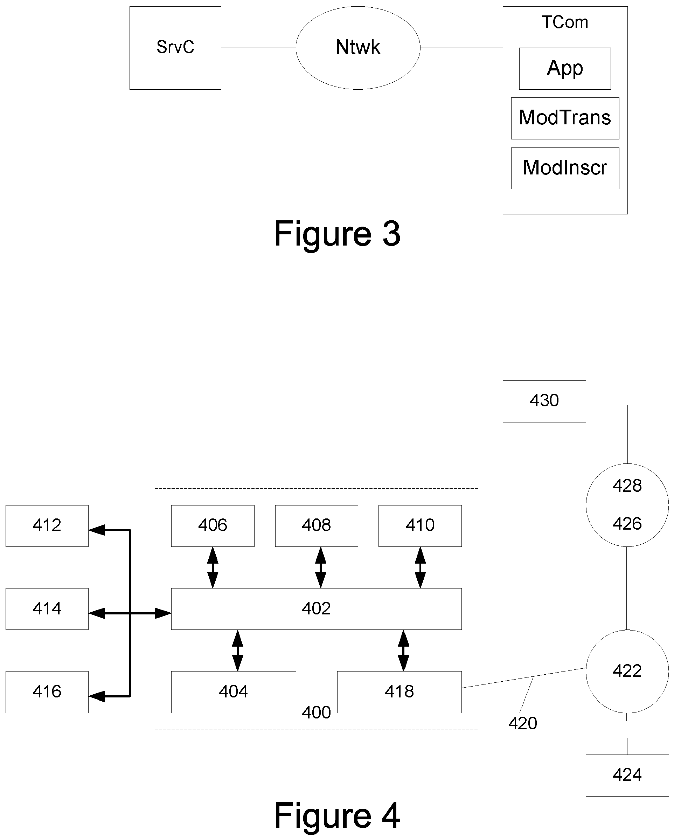

On présente, en relation avec la figure 3, le système dans lequel cet exemple de réalisation est mis en œuvre. Un tel système comprend un serveur SrvC (ou un ensemble de serveurs) appartenant à un fournisseur de services et connecté à un réseau de communication Ntwk, qui est également connecté, soit directement, soi indirectement, à un terminal de communication TCom d'un utilisateur. Le terminal de l'utilisateur comprend par ailleurs, une application d'accès App pour exécuter l'authentification, un module de transformation ModTrans, et un module d'inscription Modlnsc (ces deux modules peuvent ne former qu'un seul et même module). Ces modules de transformation et d'inscription sont par exemple installés au sein d'un espace mémoire sécurisé du terminal de communication. Par la suite, des situations ou ces deux modules ne sont pas installés au sein du terminal de communication sont également présentés.

L'authentification d'un utilisateur, comme indiqué précédemment, est mise en œuvre à partir d'une application d'accès installée sur le terminal de communication de l'utilisateur. Cette application d'accès peut se présenter sous la forme d'un navigateur (type Firefox^{™}, Chrome^{™}, etc.) ou bien d'une application spécialisée (par exemple une application d'accès à un réseau social, une application de commerce, une application de paiement, etc.), ces applications disposant d'une fonction de connexion à un serveur distant (i.e. un serveur mettant en œuvre un service). Avant de pouvoir se connecter au service, il est nécessaire de s'identifier et c'est cette procédure d'authentification qui est décrite en détail ci-dessous.
- Dans l'exemple présenté, l'application d'accès se connecte, en appelant les ressources de connexion nécessaires (une page web par exemple) à un serveur apte à mettre en œuvre la méthode d'authentification précédemment décrite, dans un de ses modes de réalisation ;
- Le serveur transmet, à l'application d'accès, une réponse comprenant d'une part un champ de saisie permettant de saisir un identifiant et d'autre part un élément (choisi par exemple de façon variable), dans un champ de réponse masqué (cela signifie que ce champ de réponse masqué n'est pas affiché par l'application d'accès) ; d'autres champs peuvent optionnellement transmis (en clair ou en masqué) dans la réponse du serveur ; une fois la réponse transmise, le serveur démarre une temporisation ;
- A réception de cette réponse de la part du serveur, l'application d'accès affiche la page de connexion et/ou récupère l'identifiant demandé (soit elle affiche la page transmise par le serveur dans la réponse, par exemple dans le cas d'une connexion à un serveur web avec une page de connexion ; et/ou elle traite l'obtention de cet identifiant à partir des données qu'elle possède, par exemple lorsque l'identifiant est préenregistré par l'application d'accès, comme c'est le cas des applications installées sur les terminaux de communication de type smartphone ou tablette) ; l'application d'accès peut obtenir également l'élément transmis par le serveur et le transmettre au module de transformation, en construisant une requête d'obtention de d'élément chiffré à destination du module de transformation ; la fourniture de l'élément, transmis par le serveur, au module de transformation peut s'accompagner de la fourniture d'un ou de plusieurs identifiants lorsque ces données sont rendues nécessaires pour identifier la clé à utiliser au sein du module de transformation ;
- A réception de l'élément et du ou des identifiants éventuels, via l'application d'accès, le module de transformation obtient la clé associée et chiffre l'élément (variable) reçu à l'aide de cette clé ; il transmet ensuite cet élément chiffré (i.e. l'élément transformé, stubrep) à l'application d'accès, en réponse à la requête transmise par celle-ci ; L'obtention de la clé de chiffrement par le module de transformation consiste par exemple à extraire, d'une base de données, gérée par le module de transformation, la clé correspondant à ce ou ces identifiants ; un autre exemple d'obtention peut consister à requérir cette clé auprès d'un module de sécurité, qui conserve ces clés dans une zone mémoire spécifique et qui peut être connecté ou inséré dans le terminal de communication ;
- A réception de la réponse en provenance du module de transformation, réponse qui comprend l'élément chiffré, l'application d'accès insère cette réponse, sous la forme d'un champ de réponse masqué, dans les données devant être transmises au serveur ; lorsque l'utilisateur (et ou l'application d'accès) a saisi son identifiant et validé la transmission des données (par exemple en cliquant sur un bouton de validation), l'application d'accès transmet ces données au serveur comprenant l'élément chiffré dans un champ dédié ou non à celui-ci ;
- A réception de la réponse en provenance de l'application d'accès, le serveur extrait l'identifiant du client et traite l'élément chiffré : d'une manière générale l'élément chiffré reçu de l'application d'accès est comparé avec un élément chiffré de référence détenu par le serveur (ou fourni à celui-ci) et lorsque ces deux éléments chiffrés sont identiques, le serveur considère que l'authentification est réussie et donne accès au service ;
- S'il advient que la réponse en provenance de l'application d'accès a été reçue trop tardivement (après une période de temps définie par la temporisation) ou bien que les deux éléments chiffrés ne correspondent pas, le serveur communique à l'application d'accès un nouveau formulaire d'authentification comprenant un nouvel élément à chiffrer (par exemple un élément variable) afin que l'application d'accès puisse retenter une connexion.

À l'issue de la mise en œuvre du procédé précédemment décrit, le terminal de communication est correctement identifié auprès du serveur. On note que dans cet exemple de réalisation, l'authentification du terminal de communication (ou de l'application d'accès du terminal de communication) a été réalisée sans que l'utilisateur n'ai été dans l'obligation de fournir un mot de passe pour pouvoir s'authentifier. Il est également envisagé, dans un autre exemple de réalisation, de mettre en œuvre cette méthode en la complétant avec la saisie ou la fourniture d'un mot de passe qui est enregistré par le serveur : une telle saisie complémentaire, bien qu'optionnelle, peut permettre d'augmenter la sécurité de l'accès au service.

Le contrôle de l'élément chiffré (élément transformé) par le serveur peut être mis en œuvre de plusieurs façons différentes. Comme indiqué précédemment, à réception des données en provenance de l'application d'accès, le serveur dispose d'une part de l'élément chiffré, en provenance de l'application d'accès et d'autre part l'élément qu'il a transmis à l'application d'accès à l'initialisation du processus. Deux cas de figure sont envisageables pour permettre la vérification de l'élément chiffré transmis par l'application d'accès, ces deux cas de figure étant ségrégés en fonction de la détention, ou non, par le serveur, de la clé associée à l'identifiant reçu de la part de l'application d'accès.

Lorsque le serveur dispose de sa propre base de données de clés, alors le serveur est en mesure de calculer son propre élément chiffré de référence (i.e. son mot de passe variable de référence). Pour ce faire, il peut obtenir l'identifiant transmis par l'application d'accès et rechercher, au sein de sa base de données de clés, la clé correspondant à cet identifiant. Une fois cette clé obtenue, il peut chiffrer l'élément variable avec celle-ci et obtient son élément chiffré de référence qu'il peut alors comparer à l'élément chiffré (i.e. le mot de passe variable) reçu de la part de l'application d'accès.

Lorsque le serveur ne dispose pas de sa propre base de données de clés, il doit faire appel à un service de résolution externe. Deux solutions sont envisageables : lorsque le service de résolution externe est un service de confiance, auquel le serveur peut accéder de manière sécurisée : la manière d'obtenir l'élément chiffré de référence est alors sensiblement identique à celle décrite dans le cas local.

Lorsque le service de résolution externe n'est pas directement lié au serveur, un autre processus est mis en œuvre, basé notamment sur le contrôle de l'autorisation du serveur à requérir l'obtention d'un élément chiffré de référence.

Dans cet exemple de réalisation, l'inscription de l'utilisateur au sein du serveur est réalisée à partir d'un module d'inscription, fonctionnant sur le terminal de communication de l'utilisateur. Le procédé d'inscription peut comprendre la mise en œuvre suivante d'étapes précédemment décrites comme :
- Une ouverture, par le module d'inscription, d'une interface d'inscription comprenant au moins une demande de saisie d'un identifiant et d'un mot de passe, qui constituent les éléments d'inscription ; en fonction des conditions de mise en œuvre opérationnelle, l'interface d'inscription peut comprendre d'autres champs permettant la saisie d'autres informations, à commencer par la saisie d'une URL auprès de laquelle le module d'inscription du terminal de communication doit ou peut se connecter pour effectuer l'inscription ;
- Lorsque l'utilisateur a finalisé la saisie des données requises pour l'inscription et qu'il a effectué la validation de cette saisie auprès de l'interface d'inscription (par exemple en cliquant ou en sélectionnant un bouton « valider »), les données saisies se rapportant notamment aux éléments d'inscription sont transmises, de manière sécurisée, au serveur ; La sécurisation de la transmission de ces données est effectuée par exemple par l'utilisation d'un échange requête/réponse HTTPS transmise au serveur d'inscription ;
- A réception de cette requête comprenant au moins les éléments d'inscription précités (i.e. les données saisies par l'utilisateur), ces éléments sont traités par le serveur pour effectuer l'inscription de l'utilisateur et la sauvegarde des éléments transmis, auprès du serveur; cette phase d'inscription et de sauvegarde peut se terminer par la transmission, au module d'inscription, d'une clé de chiffrement (d'encryptage), par l'intermédiaire d'une réponse HTTPS par exemple. Optionnellement, en cas d'erreur lors de l'inscription de l'utilisateur par le serveur, un ou plusieurs messages d'erreur peuvent être transmis au module d'inscription en lieu et place de la clé de chiffrement ;
- Une fois la clé de chiffrement reçue, le module d'inscription établit une connexion avec le module de transformation. En fonction des conditions de mise en œuvre opérationnelles, ce module de transformation peut être installé au sein du terminal de communication, ou installé au sein d'un service distant. Dans ces deux mises en œuvre, le module d'inscription peut fournir, au module de transformation, la clé de chiffrement reçue de la part du serveur ; cette fourniture peut s'accompagner de la fourniture d'un identifiant. Comme exposé précédemment, le module de transformation agit comme un service (par exemple comme un service http) et est en mesure de recevoir des requêtes d'insertion et/ou de mise à jour de clés en provenance du module d'inscription et de délivrer des données chiffrées à l'aide des clés à des applications d'accès ou des programmes qui en font correctement la demande.

Comme explicité précédemment, deux cas de figure différents sont envisageables pour ce qui est du module de transformation : installation locale sur le terminal de communication ou installation distante.

Dans un premier exemple de réalisation, le module de transformation est mis en œuvre localement : le module de transformation est installé au sein du terminal de communication de l'utilisateur. Cette mise en œuvre présente l'avantage de limiter les risques de divulgation des clés de chiffrement (i.e. matériels de transformation). Celles-ci peuvent être enregistrées au sein du terminal de communication de l'utilisateur, par exemple dans un environnement de stockage sécurisé ou dans un élément de sécurité (de l'anglais pour « Secure Element »), lorsque c'est possible. Le module d'inscription effectue localement un appel au module de transformation pour lui fournir les données nécessaires à l'inscription de cette clé (par exemple le nom d'utilisateur auquel cette clé est associée et/ou le service (i.e. une URL ou une portion d'URL) auquel cette clé est associée. On note que ces données peuvent également être transmises en cas d'implémentation à distance du module de transformation. Optionnellement, le module de transformation peut aussi enregistrer le mot de passe saisi pour l'inscription auprès du service, et reçu de la part du module d'inscription. Dans cet exemple de réalisation, l'accès au module de transformation peut par ailleurs être mis en œuvre par l'intermédiaire d'une API (« Application Programming Interface ») qui comprend une fonction d'accès au module d'inscription d'une part (par exemple une fonction d'accès spécifiquement dédiée à ce module) et une fonction d'accès spécifiquement dédiée à une ou plusieurs applications d'accès autorisées (par exemple un ou plusieurs navigateur Web et/ou une ou plusieurs applications spécialisées installés sur le terminal de communication, ces accès étant par exemple gérés à l'aide d'une liste blanche définie et enregistrée au sein du module de transformation).

Dans un deuxième exemple de réalisation, le module de transformation est mis en œuvre à distance : le module de transformation n'est pas installé au sein du terminal de communication de l'utilisateur. Cette mise en œuvre présente l'avantage de ne pas nécessiter, pour l'utilisateur, de mise à jour du module de transformation, qui est donc centralisé. Comme le module de transformation dispose de plusieurs clés à sa disposition, il peut être nécessaire de fournir un ou plusieurs identifiants complémentaires (et/ou login mots de passe), en plus de la clé de chiffrement, au moment de l'inscription de cette clé de chiffrement au sein du module de transformation.

Plusieurs possibilités sont envisagées et/ou privilégiées pour la localisation du module de transformation, lorsque celui-ci est distant du terminal de communication de l'utilisateur.

Dans une première variante, le module de transformation peut être installé au sein d'un serveur local du réseau de communication auprès duquel le terminal de communication est connecté. Dans ce cas, le module de transformation est par exemple installé au sein d'une passerelle d'accès à internet, fournie par un fournisseur d'accès à internet auprès duquel l'utilisateur est abonné, cette passerelle d'accès (également appelée « Set Top Box » ou encore « Box ») est installée chez l'utilisateur par le fournisseur d'accès à Internet et embarque le module de transformation précité.

Une telle implémentation peut, dans certains modes de réalisation, présenter des avantages pour l'utilisateur. Il est fréquent, en effet, qu'un utilisateur dispose de nombreux terminaux de communication (ordinateurs, tablettes, consoles de jeux, téléphones) au sein de son logement et l'utilisation de ces terminaux de communication est croisée. Ainsi, les services mis en œuvre sur ces terminaux de communication ne sont pas exclusifs les uns des autres : il est fréquent pour l'utilisateur de mettre en œuvre un même service nécessitant une connexion sécurisée à la fois sur un ordinateur portable et sur un smartphone, par exemple. Une telle mise en œuvre peut sécuriser encore plus l'accès à ces clés de chiffrement (matériels de transformation) : en gérant ces clés de chiffrement au sein du réseau local, il peut être plus simple d'en assurer la sécurité, par exemple en assurant que seules des requêtes internes en provenance du réseau local de l'utilisateur peuvent obtenir le chiffrement d'une information, alors que des requêtes externes (i.e. provenant de dispositifs situés à l'extérieur du réseau de communication local de l'utilisateur) ne peuvent pas obtenir le chiffrement d'une information.

Dans un deuxième exemple de réalisation, le module de transformation est installé au sein d'un serveur distant (i.e. service Cloud). Cette implémentation peut permettre à l'utilisateur d'accéder aux services précités sans nécessairement être connecté à son réseau local et, en outre, sans nécessité d'installer ce module de transformation au sein de son terminal de communication. De plus, potentiellement, une implémentation à distance du module de transformation peut aider à obtenir un niveau de sécurisation de ce gestionnaire respectant les règles de l'art en la matière et peut donc être plus sécurisée qu'une implémentation locale. Dans ce cas de figure, par ailleurs, il est nécessaire qu'une ou plusieurs données d'identification soit fournie au module de transformation lors de l'enregistrement de la clé de chiffrement, afin de permettre au module de transformation de délivrer une information chiffrée correcte au terminal de communication qui lui en fait la demande.

### 5.3. Autres caractéristiques et avantages

Selon un mode de réalisation, les techniques décrites dans le présent document sont mises en œuvre par un ou plusieurs dispositifs informatiques spécialisés. Les dispositifs informatiques spécialisés peuvent être câblés pour exécuter les techniques, ou peuvent inclure des dispositifs électroniques numériques tels qu'un ou plusieurs circuits intégrés spécifiques à une application (ASIC) ou des réseaux de portes programmables par l'utilisateur (FPGA) qui sont programmés de façon permanente pour exécuter les techniques, ou peuvent inclure un ou plusieurs processeurs matériels polyvalents programmés pour exécuter les techniques conformément aux instructions du programme dans le microprogramme, la mémoire, un autre stockage, ou une combinaison. Ces dispositifs informatiques spécialisés peuvent également combiner une logique câblée personnalisée, des ASIC ou des FPGA avec une programmation personnalisée pour réaliser les techniques. Les dispositifs informatiques spécialisés peuvent être des systèmes informatiques de bureau, des systèmes informatiques portables, des dispositifs de poche, des dispositifs de réseau ou tout autre dispositif qui incorpore une logique câblée et/ou programmée pour mettre en œuvre les techniques.

Par exemple, la figure 4 est un schéma fonctionnel qui illustre un système informatique 400. Le système informatique 400 comprend un bus 402 ou un autre mécanisme de communication pour communiquer des données de pixels, des métadonnées et autres données, et un processeur matériel 404 couplé au bus 402 pour traiter les données de pixels et les métadonnées et autres données. Le processeur matériel 404 peut être, par exemple, un microprocesseur à usage général. Le système informatique 400 comprend également une mémoire principale 406, telle qu'une mémoire vive (RAM) ou un autre dispositif de stockage dynamique, couplée au bus 402 pour stocker les données de pixels et les métadonnées et autres données et des instructions à exécuter par le processeur 404. La mémoire principale 406 peut également être utilisée pour stocker des variables temporaires ou d'autres informations intermédiaires pendant l'exécution des instructions à exécuter par le processeur 404. Ces instructions, lorsqu'elles sont stockées dans un support de stockage non transitoire accessible au processeur 404, transforment le système informatique 400 en une machine à usage spécial qui est personnalisée pour effectuer les opérations spécifiées dans les instructions. Le système informatique 400 comprend en outre une mémoire morte (ROM) 408 ou un autre dispositif de stockage statique couplé au bus 402 pour stocker des informations et des instructions statiques pour le processeur 404. Un dispositif de stockage 410, tel qu'un disque magnétique ou un disque optique, est prévu et couplé au bus 402 pour stocker des informations et des instructions. Le système informatique 400 peut être couplé via le bus 402 à un écran 412, pour afficher des informations à un utilisateur de l'ordinateur. Un dispositif d'entrée 414, comprenant des touches alphanumériques et autres, est couplé au bus 402 pour communiquer des informations et des sélections de commandes au processeur 404. Un autre type de dispositif d'entrée utilisateur est la commande de curseur 416, telle qu'une souris, une boule de commande ou des touches de direction de curseur pour communiquer des informations de direction et des sélections de commande au processeur 404 et pour commander le mouvement du curseur sur l'affichage 412.

Le système informatique 400 peut mettre en œuvre les techniques décrites dans le présent document à l'aide d'une logique câblée personnalisée, d'un ou de plusieurs ASIC ou FPGA, d'un micrologiciel et/ou d'une logique de programme qui, en combinaison avec le système informatique, fait en sorte ou programme le système informatique 400 pour qu'il soit une machine à usage spécial. Selon un mode de réalisation, les techniques du présent document sont exécutées par le système informatique 400 en réponse au processeur 404 exécutant une ou plusieurs séquences d'une ou plusieurs instructions contenues dans la mémoire principale 406. Ces instructions peuvent être lues dans la mémoire principale 406 à partir d'un autre support de stockage, tel que le dispositif de stockage 410. L'exécution des séquences d'instructions contenues dans la mémoire principale 406 amène le processeur 404 à exécuter les étapes du processus décrites dans le présent document. Dans d'autres modes de réalisation, des circuits câblés peuvent être utilisés à la place ou en combinaison avec des instructions logicielles. Le terme "support de stockage" tel qu'il est utilisé ici fait référence à tout support non transitoire qui stocke des données et/ou des instructions qui font fonctionner une machine d'une manière spécifique. Ces supports de stockage peuvent comprendre des supports non volatils et/ou des supports volatils. Les supports non volatils comprennent, par exemple, des disques optiques ou magnétiques ou des composants de mémoire (SDCARD, SSD), tels que le dispositif de stockage 410. Les supports volatils comprennent la mémoire dynamique, telle que la mémoire principale 406. Les formes courantes de supports de stockage comprennent, par exemple, une clé USB, une carte SD, un disque dur, un lecteur à semi-conducteurs, une bande magnétique ou tout autre support de stockage de données magnétique, un CD-ROM, tout autre support de stockage de données optique, tout support physique avec des motifs de trous, une RAM, une PROM, et une EPROM, une FLASH-EPROM, une NVRAM, toute autre puce ou cartouche de mémoire.

Les supports de stockage sont distincts des supports de transmission, mais peuvent être utilisés conjointement avec ces derniers. Les supports de transmission participent au transfert d'informations entre les supports de stockage. Par exemple, les supports de transmission comprennent les câbles coaxiaux, les fils de cuivre et les fibres optiques, y compris les fils qui constituent le bus 402. Les supports de transmission peuvent également prendre la forme d'ondes acoustiques ou lumineuses, telles que celles générées lors des communications de données par ondes radio et infrarouges. Diverses formes de supports peuvent être impliquées dans le transport d'une ou plusieurs séquences d'une ou plusieurs instructions vers le processeur 404 pour exécution. Par exemple, les instructions peuvent initialement être transportées sur un disque magnétique ou un lecteur à semi-conducteurs d'un ordinateur distant. L'ordinateur distant peut charger les instructions dans sa mémoire dynamique et transmettre les instructions sur une ligne téléphonique à l'aide d'un modem. Un modem local au système informatique 400 peut recevoir les données sur la ligne téléphonique et utiliser un émetteur infrarouge pour convertir les données en un signal infrarouge. Un détecteur infrarouge peut recevoir les données transportées dans le signal infrarouge et un circuit approprié peut placer les données sur le bus 402. Le bus 402 transporte les données vers la mémoire principale 406, à partir de laquelle le processeur 404 récupère et exécute les instructions. Les instructions reçues par la mémoire principale 406 peuvent éventuellement être stockées sur le dispositif de stockage 410 avant ou après l'exécution par le processeur 404. Le système informatique 400 comprend également une interface de communication 418 couplée au bus 402. L'interface de communication 418 fournit un couplage de communication de données bidirectionnel à une liaison réseau 420 qui est connectée à un réseau local 422. Par exemple, l'interface de communication 418 peut être une carte de réseau numérique à intégration de services (RNIS), un modem câble, un modem satellite ou une carte de communication sans fil (WLAN). Dans un autre exemple, l'interface de communication 418 peut être une carte de réseau local (LAN) pour fournir une connexion de communication de données à un réseau local compatible. Des liaisons sans fil peuvent également être mises en œuvre. Dans l'une quelconque de ces mises en œuvre, l'interface de communication 418 envoie et reçoit des signaux électriques, électromagnétiques ou optiques qui transportent des flux de données numériques représentant divers types d'informations.

La liaison réseau 420 assure généralement la communication de données à travers un ou plusieurs réseaux vers d'autres dispositifs de données. Par exemple, la liaison réseau 420 peut fournir une connexion via le réseau local 422 à un ordinateur hôte 424 ou à un équipement de données exploité par un fournisseur de services Internet (ISP) 426. Le FAI 426 fournit à son tour des services de communication de données par le biais du réseau mondial de communication de données par paquets, ("Internet") 428. Le réseau local 422 et l'Internet 428 utilisent tous deux des signaux électriques, électromagnétiques ou optiques qui transportent des flux de données numériques. Les signaux passant par les différents réseaux et les signaux sur la liaison réseau 420 et par l'interface de communication 418, qui transportent les données numériques vers et depuis le système informatique 400, sont des exemples de supports de transmission.

Le système informatique 400 peut transmettre des messages et recevoir des données, y compris du code de programme, par l'intermédiaire du ou des réseaux, de la liaison réseau 420 et de l'interface de communication 418. Dans l'exemple de l'Internet, un serveur 430 peut transmettre un code demandé pour un programme d'application par l'intermédiaire de l'Internet 428, du FAI 426, du réseau local 422 et de l'interface de communication 418.

Le code reçu peut être exécuté par le processeur 404 au fur et à mesure qu'il est reçu, et/ou stocké dans le dispositif de stockage 410, ou autre stockage non volatile pour une exécution ultérieure.

## Revendications

1. Procédé d'authentification d'un accès via un terminal de communication (TCom), auprès d'un serveur, ledit procédé comprenant, postérieurement à la transmission (101), par une application d'accès du terminal de communication (TCom), au serveur (SrvC), d'une requête de connexion :
- une étape de transformation (105) d'un élément variable, (Rstub) reçu du serveur, à l'aide de matériels de transformation obtenus lors d'une inscription auprès du serveur, délivrant un élément transformé (stubrep) ;
- une étape de transmission (108), au serveur, d'un identifiant (IdU) associé audit accès et de l'élément transformé (stubrep) ; et
- une étape de réception (110) d'une d'authentification dudit accès, en provenance du serveur tenant compte dudit élément transformé .

2. Procédé d'authentification, selon la revendication 1, **caractérisé en ce que** l'authentification en provenance du serveur survient lorsque la transmission, au serveur, de l'identifiant et de l'élément transformé, est effectuée avant un premier laps de temps.

3. Procédé d'authentification, selon l'une des revendications 1 à 2, le procédé comprenant :
- une réception, en provenance du serveur, par l'intermédiaire d'une liaison sécurisée, d'une réponse http comprenant un formulaire comprenant un champ de saisie de l'identifiant d'utilisateur et un champ caché comprenant l'élément variable ;
- un affichage du formulaire sur un écran du terminal de communication ;
- une extraction de l'élément variable et une transmission de l'élément variable à un module de transformation.

4. Procédé d'authentification, selon l'une des revendications 1 à 3, **caractérisé en ce que** l'étape de transformation de l'élément variable comprend :
- La détermination, par le module de transformation, de matériels de transformation à appliquer sur l'élément variable ;
- La mise en œuvre des matériels de transformation sur l'élément variable, délivrant l'élément transformé.

5. Procédé d'authentification, selon la revendication 4, **caractérisé en ce que** la détermination de matériels de transformation à appliquer sur l'élément variable comprend une étape de recherche, au sein d'une base de données, d'une clé de chiffrement.

6. Procédé d'authentification, selon la revendication 5, **caractérisé en ce que** la mise en œuvre des matériels de transformation sur l'élément variable comprend une étape de chiffrement de l'élément aléatoire à l'aide de la clé de chiffrement.

7. Procédé d'authentification, selon l'une des revendications 1 à 6, **caractérisé en ce que** l'étape de transformation de l'élément variable est mise en œuvre par un module de transformation s'exécutant sur le terminal de communication, de manière indépendante de l'application d'accès.

8. Dispositif électronique d'authentification d'un accès, auprès d'un serveur, ledit dispositif comprenant des moyens de transmission, par une application d'accès du dispositif, au serveur, d'une requête de connexion et :
- des moyens de transformation d'un élément variable, reçu du serveur, à l'aide de matériels de transformation obtenus lors d'une inscription auprès du serveur, délivrant un élément transformé ;
- des moyens de transmission, au serveur, d'un identifiant associé audit accès et de l'élément transformé ; et
- des moyens de réception d'une d'authentification dudit accès, en provenance du serveur tenant compte dudit élément transformé .

9. Dispositif électronique d'authentification d'un accès, selon la revendication 8, **caractérisé en ce que** les moyens de réception d'une d'authentification dudit accès sont mis en œuvre lorsque la transmission, par le dispositif électronique d'authentification, au serveur, de l'identifiant et de l'élément transformé, est effectuée avant un premier laps de temps.

10. Dispositif électronique d'authentification d'un accès, selon l'une des revendications 8 à 9, comprenant :
- Des moyens de réception, en provenance du serveur, par l'intermédiaire d'une liaison sécurisée, d'une réponse http comprenant un formulaire comprenant un champ de saisie de l'identifiant d'utilisateur et un champ caché comprenant l'élément variable ;
- Des moyens d'affichage du formulaire sur un écran du terminal de communication ;
- Des moyens d'extraction de l'élément variable et une transmission de l'élément variable à un module de transformation.

11. Dispositif électronique d'authentification d'un accès, selon l'une des revendications 8 à 10, **caractérisé en ce que** les moyens de transformation de l'élément variable comprennent :
- Des moyens de détermination, par le module de transformation, de matériels de transformation à appliquer sur l'élément variable ;
- Des moyens de mise en œuvre des matériels de transformation sur l'élément variable, délivrant l'élément transformé.

12. Dispositif électronique d'authentification d'un accès, selon la revendication 11, **caractérisé en ce que** les moyens de détermination de matériels de transformation à appliquer sur l'élément variable comprennent la mise en œuvre de moyens de recherche, au sein d'une base de données, d'une clé de chiffrement.

13. Dispositif électronique d'authentification d'un accès, selon la revendication 12, **caractérisé en ce que** les moyens de mise en œuvre des matériels de transformation sur l'élément variable comprennent la mise en œuvre de moyens de chiffrement de l'élément aléatoire à l'aide de la clé de chiffrement.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'authentification d'un accès via un terminal de communication selon l'une des revendications 1 à 7, lorsqu'il est exécuté sur un ordinateur.

15. Support d'enregistrement lisible par ordinateur comprenant des instructions de code de programme qui, lorsqu'elles sont exécutées par un ordinateur, conduisent celui-ci à mettre en œuvre le procédé d'authentification d'un accès via un terminal de communication selon l'une quelconque des revendications 1 à 7.
